# EUROPEAN PATENT APPLICATION

(11) **EP 3 621 270 A1**
(43) Date of publication of application: **11.03.2020**
(21) Application number: 19160122.8
(22) Date of filing: 28.02.2019
(51) Int. Cl.: H04L 29/06, H04L 9/32, G06F 21/32, H04L 29/08, G06Q 20/40

(54) **THE BLOCKWORLD PROJECT**

(30) Priority: 07.09.2018 IN 201811033623
(71) Applicant: Sharma, Anuj, New Delhi 110002 (IN)
(72) Inventor: Sharma, Anuj, New Delhi 110002 (IN)
(74) Representative: Potter Clarkson

(57) **Abstract**

A method and blockworld application platform system based on a block chain technology and created using blockchain technology and related software coding, programming languages, android technology, iOS technology, azure cloud platform; the block world platform characterized in that the blockworld platform is incorporating seven sub-platforms, namely BlockVOTE, BlockBOARD, BlockDRIVE, BlockAML, BlockLOAN, BlockPASSPORT and BlockVISA; and wherein the blockworld platform is supportive on any platforms/modes such as mobile phones, smart phones, tablets, computers, kiosks, digitals, screens, Virtual Reality supportive, Augmented Reality supportive and Mixed Reality supportive; and wherein the blockworld platform incorporates block chain based encrypted digital verifications and transactions with Artificial Intelligence Instant Analytics; the said blockworld platform is accessible anytime, anywhere and by any user.

## Description

### FIELD OF INVENTION

The Blockworld Project is a combined platform blockchain technology for seven applications listed below:
I. BlockVOTE:
II. BlockBOARD
III. BlockDRIVE
IV. BlockAML
V. BlockLOAN
VI. BlockPASSPORT
VII. BlockVISA

The scope of BLOCKWORLD is to provide its seven-applications using blockchain technology to the user

### BACKGROUND OF THE INVENTION

A short description of Blockchain: A blockchain is a growing list of records, called blocks, which are linked using cryptography. Each block contains a cryptographic hash of the previous block a timestamp, and transaction data (generally represented as a merkle tree root hash).

By design, a blockchain is resistant to modification of the data. It is "an open, distributed ledger that can record transactions between two parties efficiently and in a verifiable and permanent way". For use as a distributed ledger, a blockchain is typically managed by a peer-to-peer network collectively adhering to a protocol for inter-node communication and validating new blocks. Once recorded, the data in any given block cannot be altered retroactively without alteration of all subsequent blocks, which requires consensus of the network majority. Although blockchain records are not unalterable, blockchains may be considered secure by design and exemplify a distributed computing system with high Byzantine fault tolerance. Decentralized consensus has therefore been claimed with a blockchain.

Blockchain was invented by Satoshi Nakamoto in 2008 to serve as the public transaction ledger of the cryptocurrency bitcoin. The invention of the blockchain for bitcoin made it the first digital currency to solve the double-spending problem without the need of a trusted authority or central server. The bitcoin design has inspired other applications, and blockchains which are readable by the public are widely used by cryptocurrencies. Private blockchains have been proposed for business use.
(Source: Wikipedia)

### OBJECT OF INVENTION

BLOCKWORLD and its seven application are Mobility and computer-Mobile-Tablet-Smart Screen-Smart Glasses (Augmented Reality, Mixed Reality, Virtual Reality) supportive, incorporate Blockchain based encrypted digital verifications and transactions with Artificial Intelligence Instant Analytics. Blockworld is Accessible Anytime, Anywhere and by Any user

### SUMMARY OF INVENTION

Blockworld uses block chain technology for new areas of digital- paperless-encrypted public and private usage in digital election voting, intra-country visas, passports, ticketless travel-mobility, paperless loan disbursement, driving licenses and identity compliances.
I. BlockVOTE: Blockchain based election voting platforms and software's with artificial intelligence based descriptive, predictive and prescriptive analytics
II. BlockBOARD: Blockchain based boarding passes for air, sea travel, tickets for rail and road, travel platforms and software's with artificial intelligence based descriptive, predictive and prescriptive analytics
III. BlockDRIVE: Blockchain based driving license, issuance, renewal platforms and software's with artificial intelligence based descriptive, predictive and prescriptive analytics
IV. BlockAML: Blockchain based KYC (Know your customer) verifications and AML platforms and software's with artificial intelligence based descriptive, predictive and prescriptive analytics
V. BlockLOAN: Blockchain based loan verification and disbursement platforms and software's with artificial intelligence based descriptive, predictive and prescriptive analytics
VI. BlockPASSPORT: Blockchain based passport verification, renewal and issuance platforms and software's with artificial intelligence based descriptive, predictive and prescriptive analytics
VII. BlockVISA: Blockchain based visa verification, renewal and issuance platforms and software's for embassies, immigrations and border control agencies with artificial intelligence based descriptive, predictive and prescriptive analytics

The technologies used to create BlockWorld are:
i. Blockchain and related software coding, programming languages.
ii. Android
iii. iOS
iv. Azure Cloud Platform

### STATEMENT REGARDING FEDERALLY SPONSORED RESEARCH OR DEVELOPMENT (IN ANY)

Blockworld is NOT a government or third party sponsored research and development.

### BRIEF DESCRIPTION OF DRAWINGS

The foregoing detailed description of embodiments is better understood when read in conjunction with the appended drawing. For the purpose of illustrating the disclosure, there is shown in the present document example constructions of the disclosure; however, the disclosure is not limited to the specific methods disclosed in the document and the drawings.

The detailed description is described with reference to the accompanying figure. In the figure, the leftmost digit(s) of a reference number identifies the figure in which the reference number first appears. The same numbers are used throughout the drawings to refer like features and components.

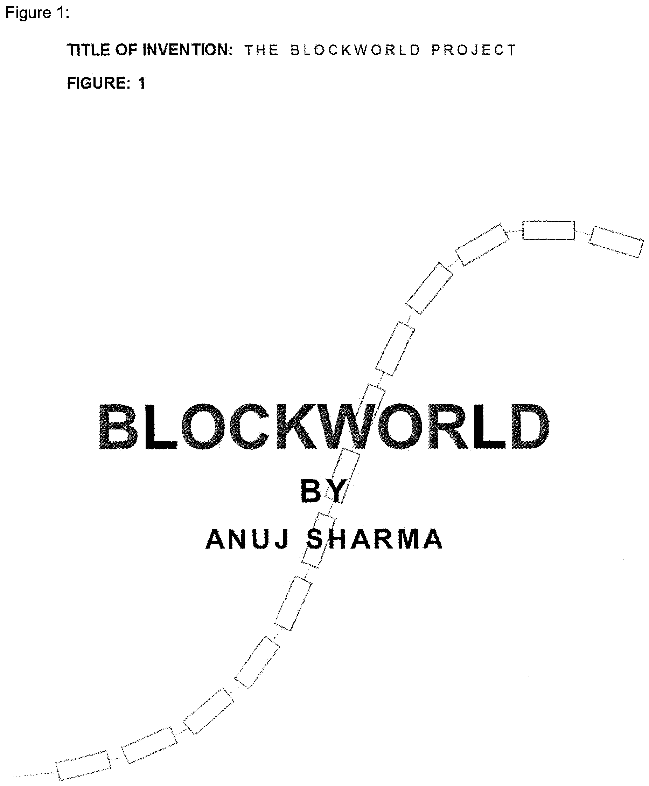

Figures 1 to Figure 20 provide a description of the capabilities and functionalities of Blockworld Platform and its applications as follows:
Figure 1 shows the BlockWorld platform.
Figure 2 depicts the Blockworld platform in its totality.
Figure 3 depicts user selection of application.
Figure 4 depicts User identification.
Figure 5 is an exemplary embodiment depicting the type of elections
Figure 6 shows the exemplary embodiment of multiple parameters of information for each candidate for user to make an informed decision.
Figure 7 is an exemplary embodiment showing the expansion of Party details.
Fig. 8 is an exemplary embodiment showing the expansion of 6.3 i.e. Criminal Records screen.
Fig. 9 is an exemplary embodiment showing the expansion of 6.8 i.e. Manifesto and promises screen.
Fig. 10 is an exemplary embodiment showing the expansion of 6.5 i.e. carrier history screen.
Fig. 11 is an exemplary embodiment showing the expansion of 6.9 i.e. AI Analytics and Result screen.
Figure 12 illustrates an embodiment of working of another application of BlockWorld called BlockPassport (2.3)
Figure 13 depicts same as Fig. 4 in relation to BlockPassport
Figure 14 depicts same as Fig. 5 in relation to BlockPassport
Figure 15 screen comprises of screens for parameters from 15.1 TO 15.10 showing multiple DETAILS OF PASS PORT HOLDER (the user)
Figure 16 depicts expansion of 6.9 screen as shown in Fig. 11 and in relation to BlockPassport
Figure 17 illustrates an embodiment of working of another application of BlockWorld called BlockVisa (2.4)
Figure 18 illustrates an embodiment of working of another application of BlockWorld called BlockBoard (2.2)
Figure 19 shows the Architecture of BlockVisa (2.4)
Figure 20 shows the Architecture of BlockDrive (2.7)

### DETAILED DESCRIPTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. Although any methods similar or equivalent to those described herein can be used in the practice or testing of embodiments of the present disclosure, the exemplary, methods are now described.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated, but is to be accorded the widest scope consistent with the principles and features described herein.

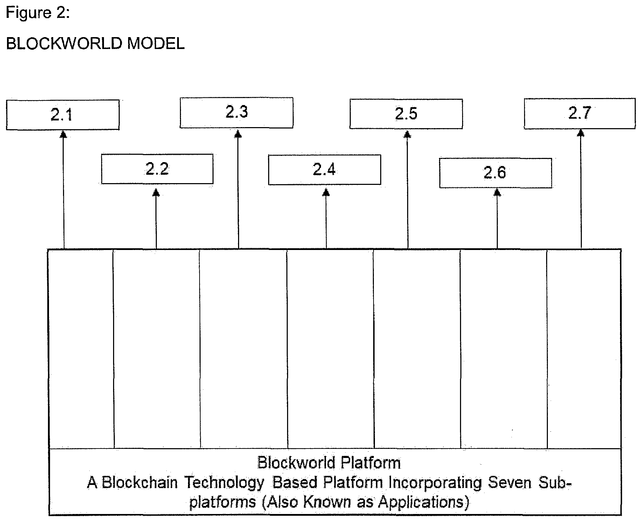

Figure 2 depicts the Blockworld platform in its totality. It shows the seven applications of blockworld platform namely; BlockVote (2.1), BlockBoard (2.2), BlockPassport (2.3), BlockVISA (2.4), BlockLoan (2.5), BlockAML (2.6), BlockDrive (2.7)

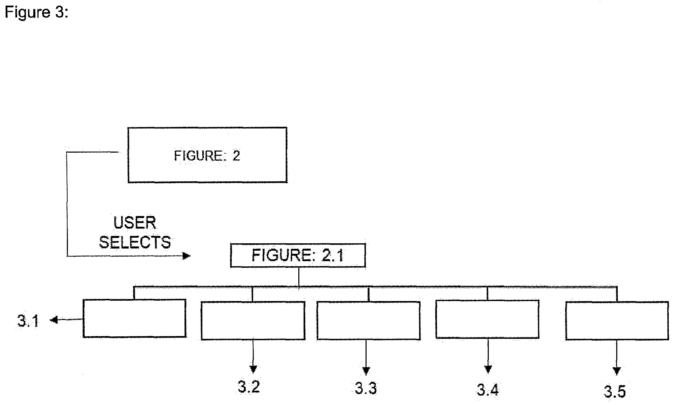

User can Select any one of the seven applications as shown in figure 2. As an example, figure 3 depicts user selecting application: BlockVote (2.1). User can access Blockvote application on any available platforms/modes such as mobile phones, smartphone, tablets, computers, kiosk digital screens, Virtual reality, Augmented reality and Mixed reality as shown in Fig. 3 as Kiosk Screen (3.1), mobile phone screen (3.2), tablet screen (3.3), virtual reality (3.4), augmented and mixed reality (3.5)

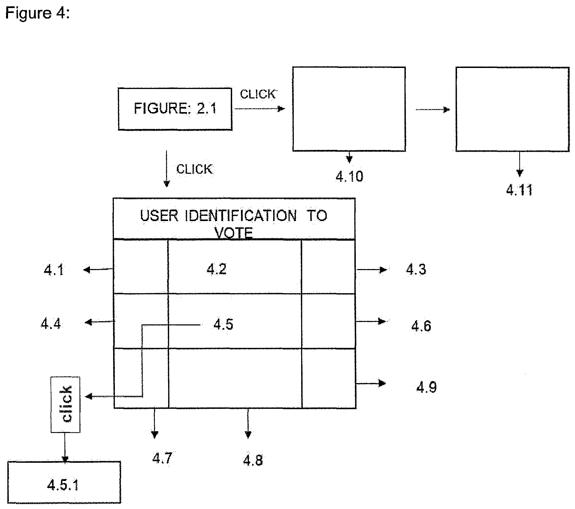

The opening screen of BlockVote (2.1) application takes each user to blockchain based identification as shown in figure 4. The identification mechanism incorporates a range of identification technologies that can be used to create block of user identity on blockchain as shown in figure 4; AI enabled face recognition (4.1), AI enabled fingerprint (4.2), AI enabled voice recognition (4.3), AI enabled iris scan (4.4), AI enabled DNA matching (4.6), all other available identification modes can be configured in (4.7, 4.8, 4.9) buttons of figure 4. User selects the option of identification to proceed ahead. All Digital scans of all identification records of user are also available for viewing to the user (4.5) with an upload option of missing / new documents (4.5.1). The user who is not registered in Blockvote can also enroll using new Voter Registration option (4.10) which opens further screens for completing documentary details and registration (4.11). 4.11 takes to screen 4. AI refers to Artificial Intelligence

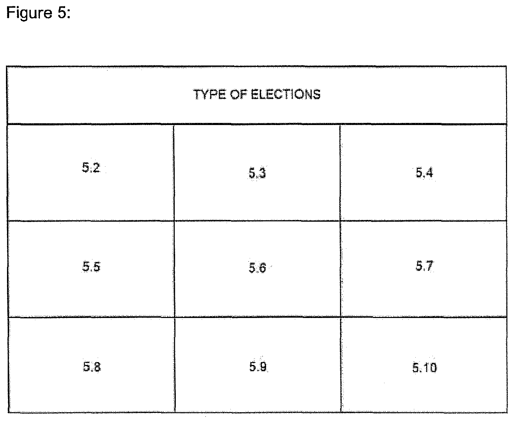

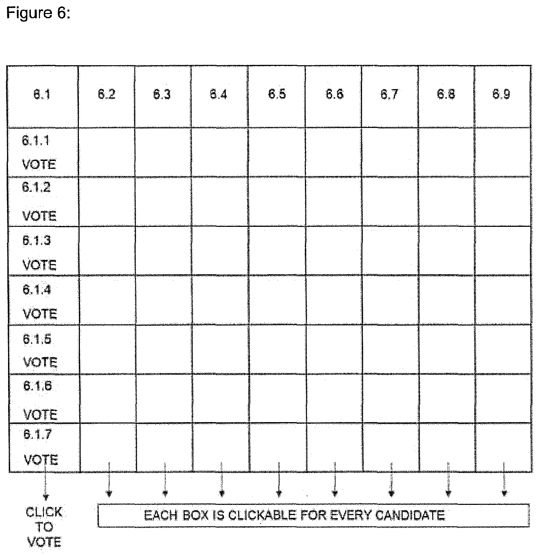

Upon completing the blockchain identification in figure 4, user comes to options for selecting types of elections he is intending to vote for (figure 5). User can select the type of elections (5.1) he is participating in; National election (5.2), State-District Election (5.3), Municipal Election (5.4), Student Union Election (5.5), Worker Union Election (5.6), Company Board Election (5.7), User access to any other type of elections can be configured by selecting (5.8, 5.9, 5.10). Upon selecting from figure 5, user goes to figure 6.

Figure 6 shows the example of election candidates screen in BlockVote (2.1). Each electoral candidate's records are loaded into BlockVote (2.1) and also verified as a "block" on blockchain. Figure 6 screen shows multiple parameters of information for each candidate for user to make an informed decision. The information parameters for each candidate are 6.1 CANDIDATE NAME, 6.2 PARTY DETAILS, 6.3 CRIMINAL RECORDS, 6.4 FINANCIAL RECORDS, 6.5 CAREER HISTORY, 6.6 AWARDS AND SOCIAL MEDIA FEEDS, 6.7 VIDEOS AND PHOTOS, 6.8 MANIFESTO AND PROMISES, 6.9 AI ANALYTICS AND RESULTS which upon clicking open into further screens. The user can click on the candidate for which the user will like to vote by clicking on Voting button (6.1.1 TO 6.1.7). Once the User votes, the vote is verified and encrypted as a block on blockchain and cannot be modified. More parameters can also be added as required.

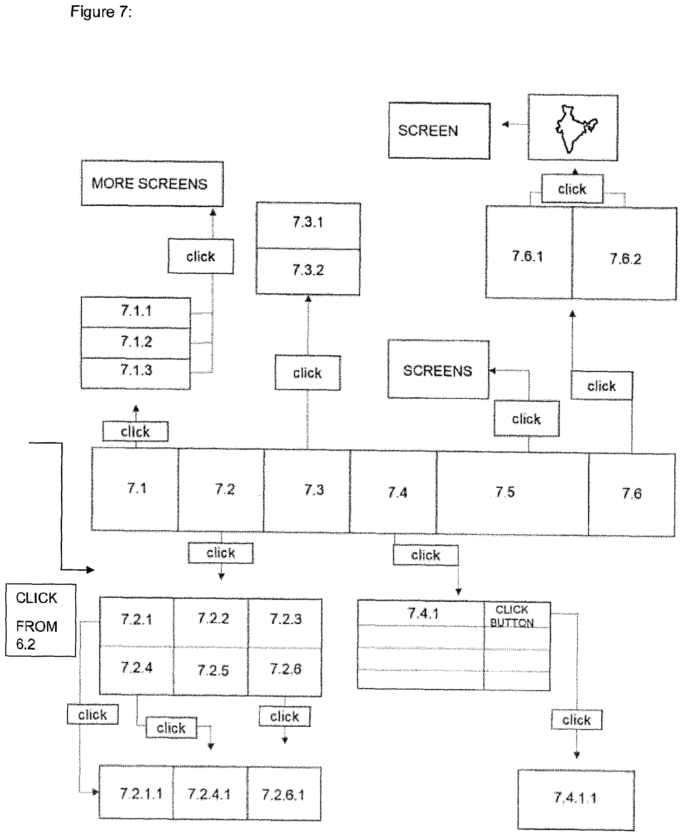

An example of expanding 6.2 PARTY DETAILS screen is shown in Figure 7. The information parameters for each Party are 7.1 HISTORY OF PARTY, 7.2 CONTACT PARTY, 7.3 PARTY FINANCIALS, 7.4 LAWS SUPPORTED BY PARTY, 7.5 OTHER CANDIDATES OF PARTY, 7.6 PARTY ELECTION ANALYTICS which upon clicking open into further screens. The parameter of 7.1 HISTORY OF PARTY opens into 7.1.1 DIGITAL RECORDS, 7.1.2 PHOTOS, 7.1.3 VIDEOS. The parameter of 7.2 CONTACT PARTY opens into 7.2.1 SKYPE which opens further into 7.2.1.1 SKYPE HOMEPAGE, 7.2.2 MUTE, 7.2.3 WHATSAPP, 7.2.4 PHONE which opens further into 7.2.4.1 DIALPAD, 7.2.5 GOOGLE SEARCH, 7.2.6 EMAIL TO PARTY which opens further into 7.2.6.1 VOTER EMAIL OPENS. The parameter of 7.3 PARTY FINANCIALS further opens into 7.3.1 DIGITAL SCANS and 7.3.2 ANALYTICS. The parameter of 7.4 LAWS SUPPORTED BY PARTY further opens into 7.4.1 LAW DETAILS which further opens to 7.4.1.1 DIGITAL SCANS OF LAWS. The parameter of 7.5 OTHER CANDIDATES OF PARTY opens into further screens. The Parameter of 7.6 PARTY ELECTION ANALYTICS opens into 7.6.1 ANALYTICS- ELECTION RESULTS (any part of any country can be selected here) and 7.6.2 ANALYTICS- ELECTION SURVEY (any part of any country can be selected here) which open to further screens. More parameters can also be added as required.

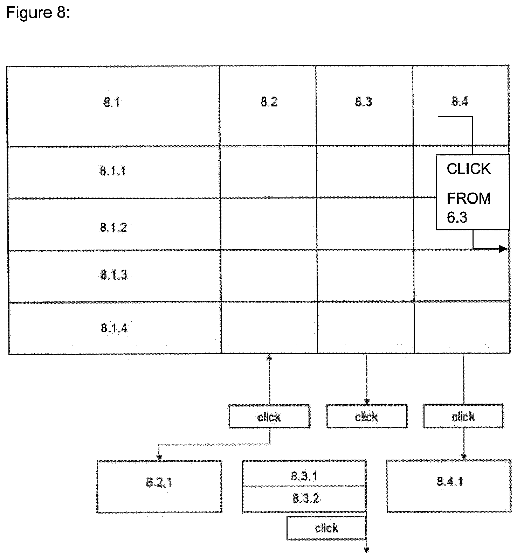

An example of expanding 6.3 CRIMINAL RECORDS screen is shown in Figure 8. The information parameters for 6.3 are 8.1 TYPES OF CRIMINAL RECORD which opens further into 8.1.1 TYPES OF CRIMINAL RECORD 1, 8.1.2 TYPES OF CRIMINAL RECORD 2, 8.1.3 TYPES OF CRIMINAL RECORD 3, 8.1.4 TYPES OF CRIMINAL RECORD 4. The parameter of 8.2 DIGITAL RECORDS which further opens into 8.2.1 DIGITAL SCAN SCREENS. The parameter of 8.3 VIDEOS AND RECORDS which further opens into 8.3.1 VIDEOS and 8.3.2 PHOTOS. The parameter of 8.4 CONVICTION DETAIL RECORDS which further opens into 8.4.1 DIGITAL SCANS OPEN. More parameters can also be added as required.

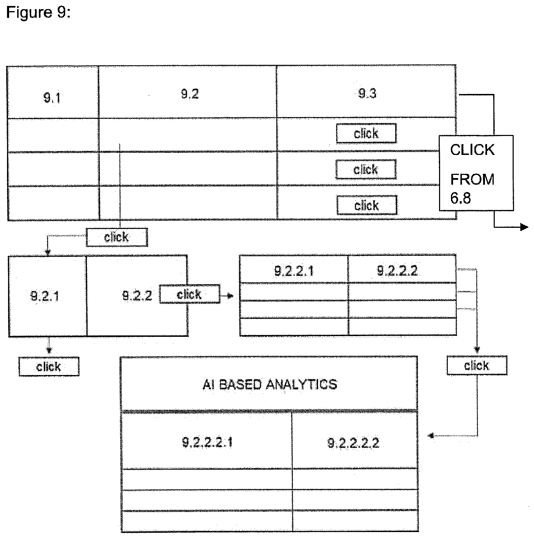

An example of expanding 6.8 MANIFESTO AND PROMISES screen is shown in Figure 9. The information parameters for 6.8 are 9.1 BY YEAR, 9.2 PARTY MANIFESTO which further opens into screens of 9.2.1 DIGITAL SCANS, 9.2.2 AI BASED ANALYTICS which opens into screens of 9.2.2.1 MANIFESTO PROMISE and 9.2.2.2 ANALYTICS. The parameter of 9.2.2.2 ANALYTICS further opens into 9.2.2.2.1 DETAILS and 9.2.2.2.2 GRAPHS/CHARTS/VISUALISATION/ PERCENTAGE COMPLETION. Another parameter for 6.8 is 9.3 CANDIDATE PROMISE. More parameters can also be added as required.

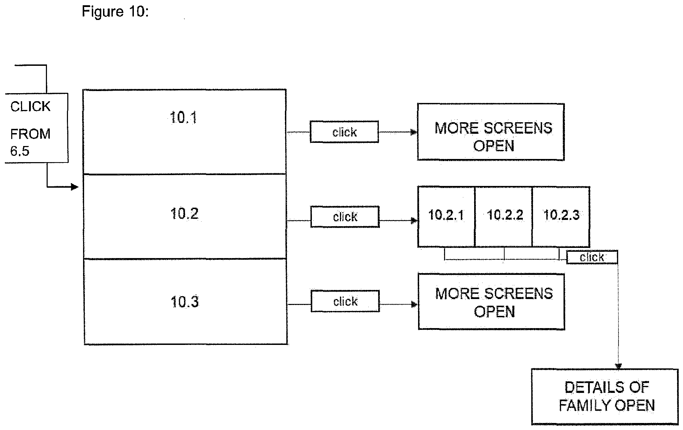

An example of expanding 6.5 CAREER HISTORY screen is shown in Figure 10. The information parameters for 6.5 are 10.1 CANDIDATE CAREER HISTORY and 10.2 CANDIDATE FAMILY DETAILS which opens into screens of 10.2.1 SPOUSE DETAILS 10.2.2 CHILD 1 DETAILS 10.2.3 CHILD 2 DETAILS. Another parameter for 6.5 is 10.3 CANDIDATE BUSINESS DETAILS. More parameters can also be added as required.

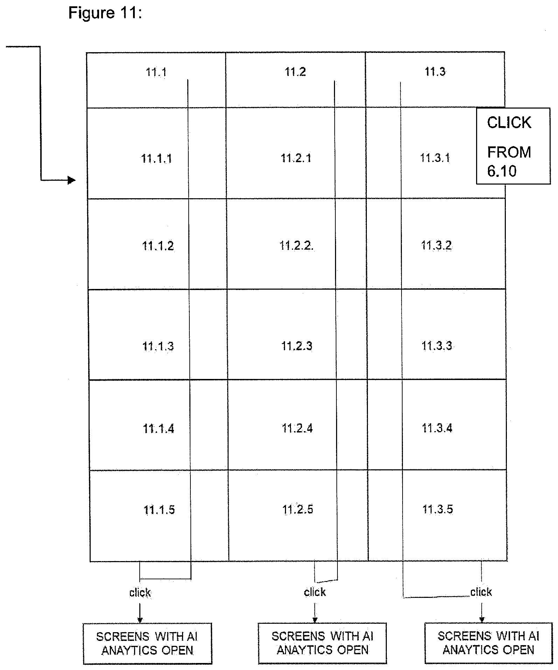

An example of expanding 6.9 AI ANALYTICS AND RESULTS screen is shown in Figure 11. The information parameters for 6.9 are 11.1 DESCRIPTIVE ANALYTICS + RESULTS which further opens into 11.1.1 FOR ALL POLITICAL PARTIES, 11.1.2 FOR ALL CANDIDATES, 11.1.3 FOR EVERY STATE/DISTRICT AND CONSTITUENCY, 11.1.4 FOR ALL TYPE OF ELECTIONS, 11.1.5 FOR EVERY COUNTRY GLOBALLY. More parameters can also be added as required for descriptive analytics. When user selects 11.2 PREDICTIVE ANALYTICS + RESULTS, it opens further screens; 11.2.1 FOR ALL POLITICAL PARTIES, 11.2.2 FOR ALL CANDIDATES, 11.2.3 FOR EVERY STATE/DISTRICT AND CONSTITUENCY, 11.2.4 FOR ALL TYPE OF ELECTIONS, 11.2.5 FOR EVERY COUNTRY GLOBALLY. More parameters can also be added as required for predictive analytics. When user selects 11.3 PRESCRIPTIVE ANALYTICS + RESULTS it opens further screens;11.3.1 FOR ALL POLITICAL PARTIES, 11.3.2 FOR ALL CANDIDATES, 11.3.3 FOR EVERY STATE/DISTRICT AND CONSTITUENCY, 11.3.4 FOR ALL TYPE OF ELECTIONS, 11.3.5 FOR EVERY COUNTRY GLOBALLY. More parameters can also be added as required for prescriptive analytics. AI refers to Artificial Intelligence. All analytics in this screen are AI enabled. Graphs, Infographics, Charts, etc. can be used in these analytics also.

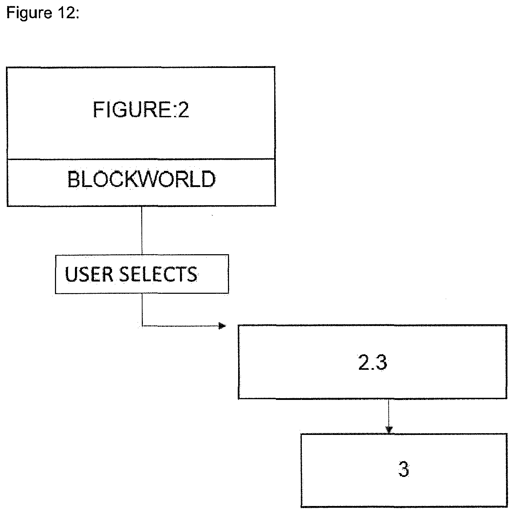

Figure 12 illustrates the example of working of another application of BlockWorld called BlockPassport (2.3). In figure 12, 2. REFERS TO FIGURE 2 IN THE PATENT DOCUMENT. [Figure 2 depicts the Blockworld platform in its totality. It shows the seven applications of blockworld platform namely; BlockVote (2.1), BlockBoard (2.2), BlockPassport (2.3), BlockVISA (2.4), BlockLoan (2.5), BlockAML (2.6), BlockDrive (2.7). user selects application: BlockPassport (2.3). User can access Blockvote application on any available platforms/modes such as mobile phones, smartphone, tablets, computers, kiosk digital screens, Virtual reality, Augmented reality and Mixed reality as shown in 3.1, 3.2, 3.3, 3.4, 3.5 of figure 3

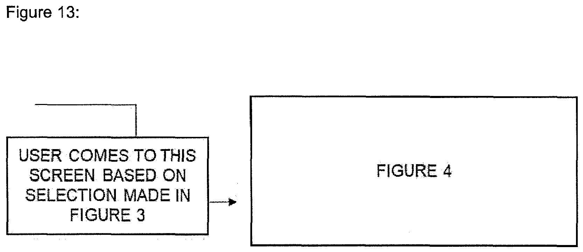

Figure 13 depicts same as Figure 4. The opening screen of BlockPassport (2.3) application takes each user to blockchain based identification as shown in figure 4. The identification mechanism incorporates a range of identification technologies that can be used to create block of user identity on blockchain as shown in figure 4; AI enabled face recognition (4.1), AI enabled fingerprint (4.2), AI enabled voice recognition (4.3), AI enabled iris scan (4.4), AI enabled DNA matching (4.6), all other available identification modes can be configured in (4.7, 4.8, 4.9) buttons of figure 4. User selects the option of identification to proceed ahead. All Digital scans of all identification records of user are also available for viewing to the user (4.5) with an upload option of missing / new documents (4.5.1). The user who is not registered in BlockPassport (2.3) can also enroll using new Voter Registration option (4.10) which opens further screens for completing documentary details and registration (4.11). AI refers to Artificial Intelligence

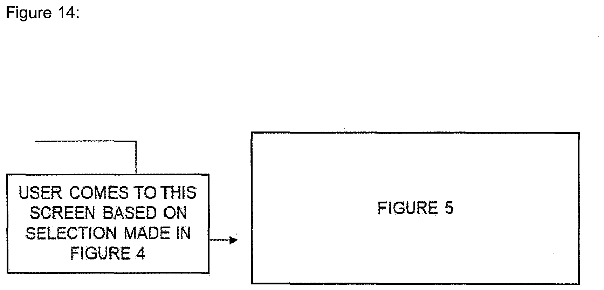

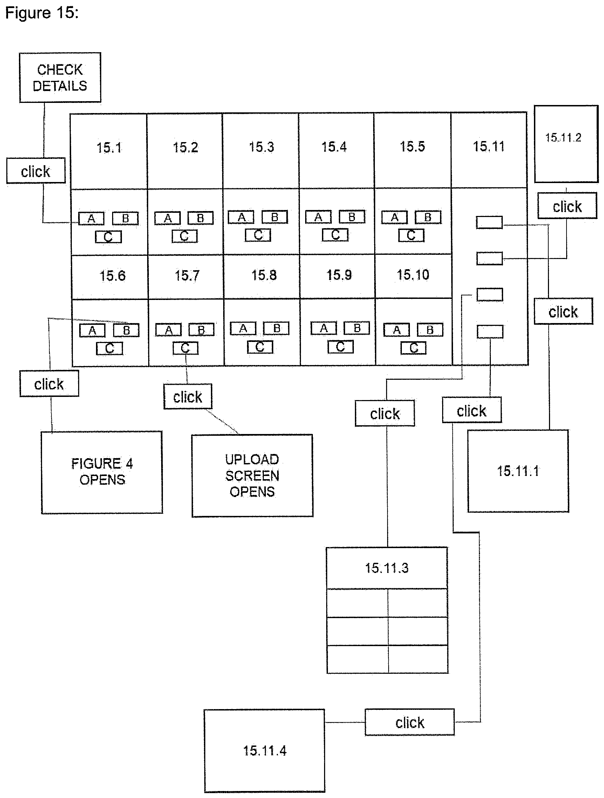

Figure 14 depicts same as Figure 5. Upon completing the blockchain identification in figure 4, user comes to options for selecting types of passport he/she is intending to obtain using BlockPassport (2.3). All Types of Passport will be available for the user to select as per regulations of the user's country. upon selecting from figure 5, user goes to figure 15 of BlockPassport (2.3)

Figure 15 screen comprises of screens for parameters from 15.1 TO 15.10 showing multiple DETAILS OF PASS PORT HOLDER (the user). More parameters can also be added as required. Under each parameter from 15.1 to 15.10, user has 3 options to select for each parameter: A-CHECK DETAILS, B -SUBMIT BUTTON and C-UPLOAD BUTTON which opens further screens. Selecting B -SUBMIT BUTTON or C-UPLOAD BUTTON takes user to Figure 4(blockchain identification). Figure 15 also has parameter of 15.11 DETAILS OF PREVIOUS PASS PORT which has options of 15.11.1 Digital scans of previous passports, 15.11.2 User History (modelled as figure 10), 15.11.3 PASSPORT HISTORY which opens into further screens and 15.11.4 CRIMINAL RECORDS (modelled as Figure 8)

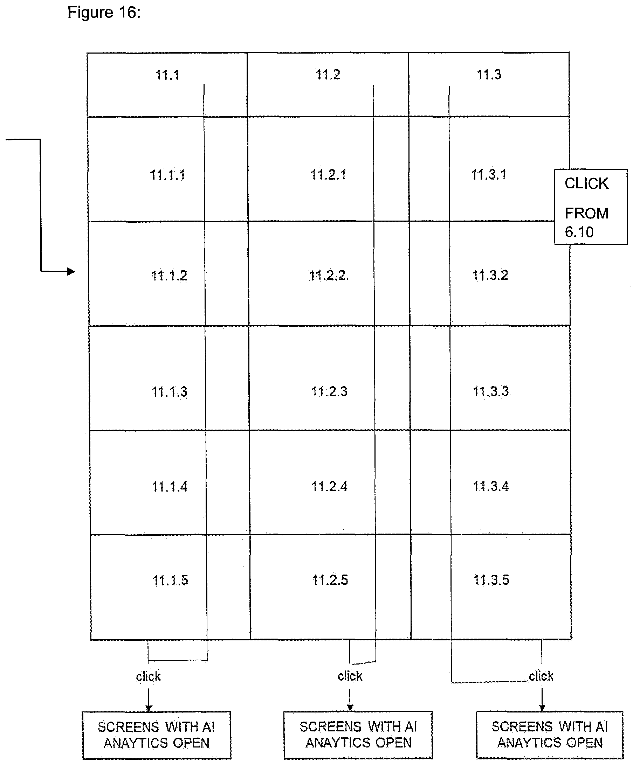

Figure 16 will be expanding 6.9 AI ANALYTICS AND RESULTS screen is shown in Figure 11 but modelled on parameters of BlockPassport (2.3) as required by issuing passport authorities. The information parameters will be 16.1 DESCRIPTIVE ANALYTICS + RESULTS which further opens into screens. More parameters can also be added as required for descriptive analytics. When user selects 16.2 PREDICITVE ANALYTICS + RESULTS, it opens further screens. More parameters can also be added as required for predictive analytics. When user selects 16.3 PRESCRIPTIVE ANALYTICS + RESULTS it opens further screens. More parameters can also be added as required for prescriptive analytics. AI refers to Artificial Intelligence. All analytics in this screen are Alenabled. Graphs, Infographics, Charts, etc. can be used in these analytics also.

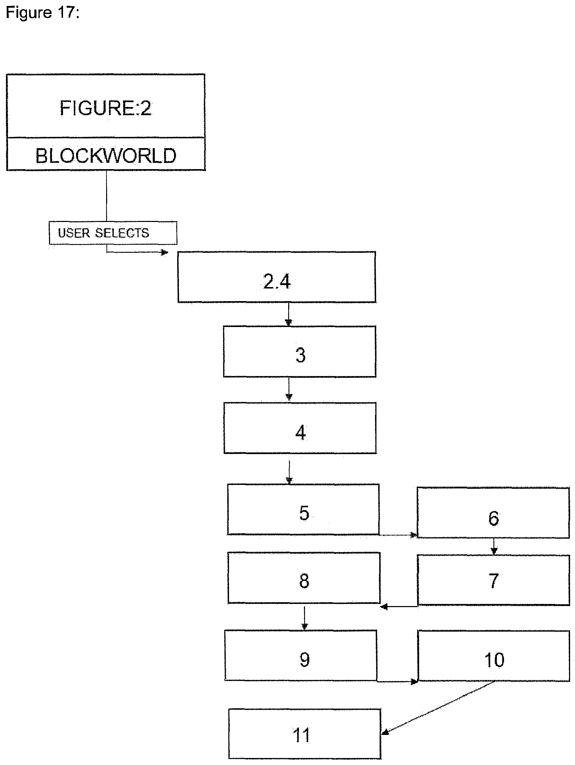

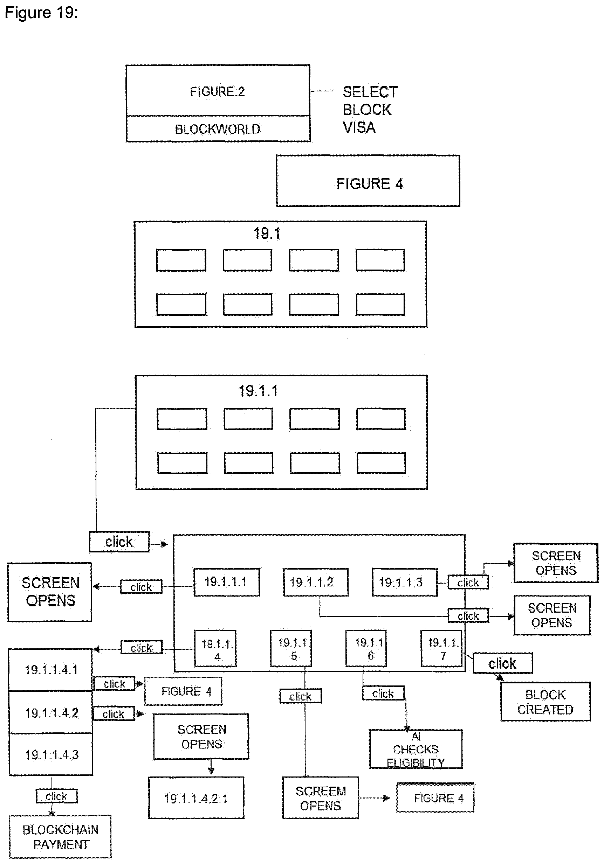

Figure 17 is example of BlockVISA (2.4) Application in BlockWorld. BlockVISA (2.4) will be modelled same as Figure 2, Figure 3, Figure 4, Figure 5, Figure 6, Figure 7, Figure 8, Figure 9, Figure 10 and Figure 11, however the parameters will change as per visa issuing, renewal and verification requirements of each country and its embassy, immigration and border control regulations in these figures. BlockVISA (2.4) architecture is depicted in Figure 19.

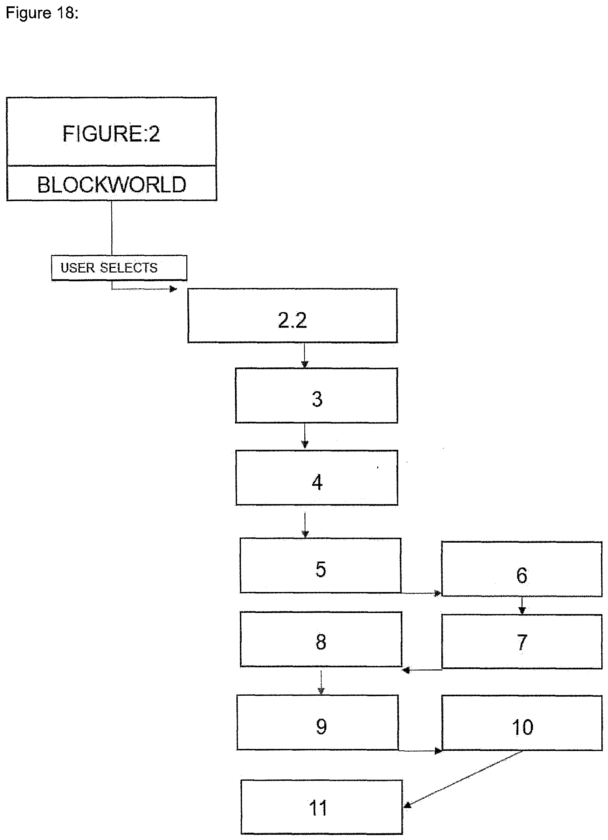

Figure 18 is example of BlockBoard (2.2) Application in BlockWorld. BlockBoard (2.2) will be modelled same as Figure 2, Figure 3, Figure 4, Figure 5, Figure 6, Figure7, Figure 8, Figure 9, Figure 10 and Figure 11, however the parameters will change as per Airline Ticketing-Boarding passes, Rail Tickets including Coach-cabin access, Ship tickets including coach and cabin access and Bus tickets-based requirements of each transport-mobility provider and country regulations in these figures. BlockBoard (2.2) will ensure passenger authentication at various points of entry-exit in mobility systems using figure 4.

Figure 19 shows the architecture of BlockVISA (2.4). User selects application: BlockVISA (2.4). User can access BlockVisa (2.4) application on any available platforms/modes such as mobile phones, smartphone, tablets, computers, kiosk digital screens, Virtual reality, Augmented reality and Mixed reality as shown in 3.1, 3.2, 3.3, 3.4, 3.5 as shown in figure 3

The opening screen of BlockVisa (2.4) application takes each user to blockchain based identification as shown in figure 4. The identification mechanism incorporates a range of identification technologies that can be used to create block of user identity on blockchain as shown in figure 4; AI enabled face recognition (4.1), AI enabled fingerprint (4.2), AI enabled voice recognition (4.3), AI enabled iris scan (4.4), AI enabled DNA matching (4.6), all other available identification modes can be configured in (4.7, 4.8, 4.9) buttons of figure 4. User selects the option of identification to proceed ahead. All Digital scans of all identification records of user are also available for viewing to the user (4.5) with an upload option of missing / new documents (4.5.1). The user who is not registered in BlockVisa (2.4) can also enroll using new Registration option (4.10) which opens further screens for completing documentary details and registration (4.11). AI refers to Artificial Intelligence. Upon completing the blockchain identification in figure 4, user comes to options for selecting the country or countries he/she is intending to visit as shown in 19.1 COUNTRY OF VISIT. User can select multiple countries to visit also. Selecting the country takes user to 19.1.1 TYPE OF VISAS COUNTRY WISE where all types of visas of that country are listed for user to select. Upon selecting the type of visa, screen open for that selected visas which includes (but not limited to)19.1.1.1 VISA GUIDELINES, 19.1.1.2 VISA ELIGIBILITY, 19.1.1.3 PAST VISA ISSUED and 19.1.1.4 VISA APPLICATION. Upon selecting 19.1.1.4 VISA APPLICATION, further screens open such as 19.1.1.4.1 IDENTIFICATION, 19.1.1.4.2 OTHER FIELD, 19.1.1.4.3 PAY FEES. Selecting 19.1.1.4.3 PAY FEES takes user to blockchain based payment system screens. Selecting 19.1.1.4.2 OTHER FIELD opens screens of 19.1.1.4.2.1 USER VISA INTERVIEW which can be done in Augmented Reality, Mixed Reality, Virtual Reality or Video mode also apart from scheduling face to face interview. AI enabled cameras will be able to conduct face detection of candidate's answers and emotions including facial expressions related to lying and untruthfulness of visa questions. Other paraments available for selection are 19.1.1.5 FAMILY MEMBER, 19.1.1.6 VISA RENEWAL which opens to further screens. User has option of submitting his application using parameter 19.1.1.7 SUBMIT which creates the "block" of the completed application and send to visa issuing authority. Parameters and screens can be modified as per requirement.

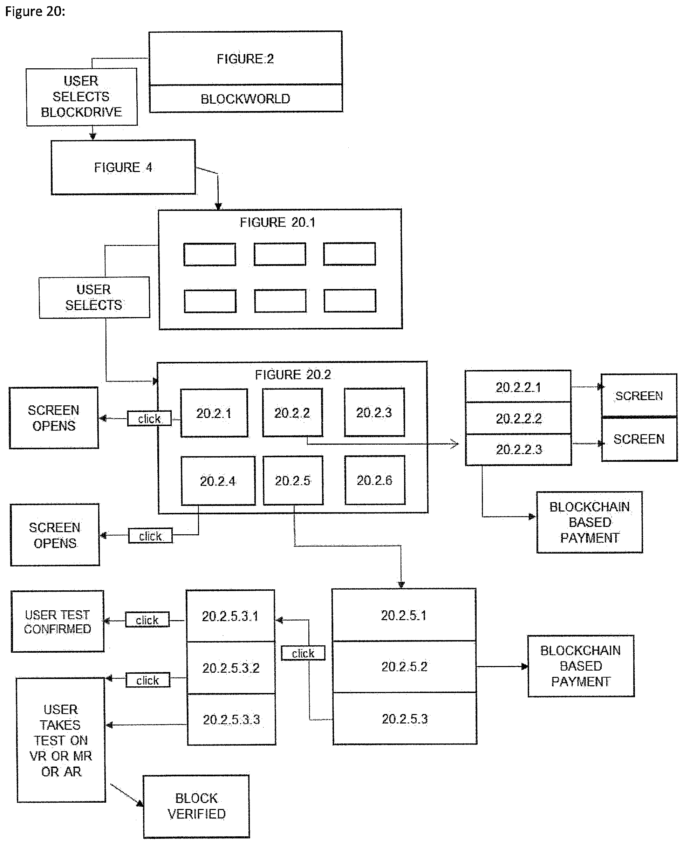

Figure 20 shows the architecture of BlockDrive (2.7). User selects application: BlockDrive (2.7). User can access BlockDrive (2.7) application on any available platforms/modes such as mobile phones, smartphone, tablets, computers, kiosk digital screens, Virtual reality, Augmented reality and Mixed reality as shown in 3.1, 3.2, 3.3, 3.4, 3.5 as shown in figure 3

As shown in figure 20: The opening screen of BlockDrive (2.7) application takes each user to blockchain based identification as shown in figure 4. The identification mechanism incorporates a range of identification technologies that can be used to create block of user identity on blockchain as shown in figure 4; AI enabled face recognition (4.1), AI enabled fingerprint (4.2), AI enabled voice recognition (4.3), AI enabled iris scan (4.4), Alenabled DNA matching (4.6), all other available identification modes can be configured in (4.7, 4.8, 4.9) buttons of figure 4. User selects the option of identification to proceed ahead. All Digital scans of all identification records of user are also available for viewing to the user (4.5) with an upload option of missing / new documents (4.5.1). The user who is not registered in BlockDrive (2.7) can also enroll using new Registration option (4.10) which opens further screens for completing documentary details and registration (4.11). AI refers to Artificial Intelligence. Upon completing the blockchain identification in figure 4, user comes to options for selecting the types of licenses he/she is intending to obtain as shown in 20.1 TYPES OF DRIVING LICENSES (Car, Drone, Bike, Truck, Motorcycle, Rail, Ship, Airplane, helicopter etc.). Upon selecting, screens open for 20.2 OPTIONS which comprise of .20.2.1 LICENSE HISTORY OF USER, 20.2.2 FINES which further opens into screens of 20.2.2.1 HISTORICAL FINES, 20.2.2.2 OUTSTANDING FINES, 20.2.2.3 PAY FINES. 20.2 OPTIONS also have other parameters such as 20.2.3 TRAFFIC VIOLATIONS 20.2.4 LICENSE GUIDELINES which open into further screens. Parameters and screens can also be modified as per requirement. 20.2 OPTIONS also have other parameters such as 20.2.5 LICENSE APPLICATION which opens into other screens such as 20.2.5.1 DETAILS, 20.2.5.2 PAY FEES, 20.2.5.3 DRIVING TEST. 20.2.5.2 PAY FEES take user to blockchain based payment system screens. 20.2.5.3 DRIVING TEST opens to further screens of 20.2.5.3.1 IN PERSON, 20.2.5.3.2 VIRTUAL REALITY, 20.2.5.3.3 AUGMENTED REALITY. License tests can be done in Augmented Reality, Mixed Reality, Virtual Reality or Video mode also apart from scheduling face to face interview. AI enabled cameras will be able to conduct face detection of candidate's answers and emotions including facial expressions related to licenses. 20.2 OPTIONS also have parameters of 20.2.6 LICENSE RENEWAL which opens into further screens.

In (2.4), BlockLoan (2.5) and BlockAML (2.6) Application in BlockWorld. Both (2.4), BlockLoan (2.5) and BlockAML (2.6) will be modelled same as Figure 2, Figure 3, Figure 4, Figure 5, Figure 6, Figure7, Figure 8, Figure 9, Figure 10 and Figure 11, however the parameters will change as per requirements and regulations in these figures. Both (2.4), BlockLoan (2.5), BlockAML (2.6) will ensure authentication at various points using figure 4. In case of BlockLoan (2.5), the loan disbursement and all its installments will also be created as a "block" on blockchain. BlockAML (2.6) creates the KYC (Know your Customer) and (Anti Money laundering) "Blocks" of each user in the Blockchain which can be accessed by any authority for verifications and subsequent processing.

## Claims

1. A blockworld application platform system based on a block chain technology and created using blockchain technology and related software coding, programming languages, android technology, iOS technology, azure cloud platform; the block world platform **characterized in that** the blockworld platform is incorporating seven sub-platforms, namely BlockVOTE, BlockBOARD, BlockDRIVE, BlockAML, BlockLOAN, BlockPASSPORT and BlockVISA;
and wherein the blockworld platform is supportive on any platforms/modes such as mobile phones, smart phones, tablets, computers, kiosks, digitals, screens, Virtual Reality supportive, Augmented Reality supportive and Mixed Reality supportive;
and wherein the blockworld platform incorporates block chain based encrypted digital verifications and transactions with Artificial Intelligence Instant Analytics;
the said blockworld platform is accessible anytime, anywhere and by any user.

2. A blockworld application platform system as claimed in claim 1 wherein the opening screen 2.1 of the application takes each user to block chain based identification and wherein the identification mechanism incorporates a range of identification technologies that can be used to create block of user identity on block chain, the identification mechanism selectively comprising of AI enabled face recognition (4.1), AI enabled fingerprint (4.2), AI enabled voice recognition (4.3), AI enabled iris scan (4.4), AI enabled DNA matching (4.6), all other available identification modes configured in (4.7, 4.8, 4.9) in any combination.

3. A blockworld application platform system as claimed in claim 1 wherein the user has an option to select anyone of the seven application from the seven sub-platforms.

4. A method of executing the BlockWORLD platform as claimed in claim 1 wherein a user selects BlockVOTE sub-platform as shown in BlockVOTE architecture, comprising the steps of user selecting the application on any available platforms/modes such as mobile phones, smart phones, tablets, computers, kiosks, digitals, screens, Virtual Reality, Augmented Reality and Mixed Reality;
and wherein the opening screen of the application takes each user to block chain based AI enabled identification;
after completing the block chain identification user selecting the type of elections he is intending to vote;
the platform showing the election candidates screen in BlockVOTE wherein each electoral candidates records are loaded into BlockVOTE and verified as a "block" on block chain;
the user having an option of submitting his vote which creates the "block" of the completed application.

5. A method as claimed in claim 4 wherein the sub-platform to be executed is the BlockBOARD platform as shown in BlockBOARD architecture modelled in the same manner however the parameters change as per requirement of each transport - mobility provider and country regulations; and wherein the BlockBOARD ensures passenger authentication at various points of entry -exit in mobility systems.

6. A method as claimed in claim 4 wherein the sub-platform to be executed is the BlockDRIVE platform as shown in BlockDRIVE architecture modelled in the same manner wherein all digital scans of all identification records of user are also available for viewing to the user with an upload option of missing / new documents; and wherein the parameters change as per requirements and wherein a non-registered BlockDRIVE user can enroll using new registration option which opens further screens for completing documentary details and registration.

7. A method as claimed in claim 4 wherein the sub-platform to be executed is the BlockAML platform as shown in BlockAML architecture modelled in the same manner wherein BlockAML creates the KYC and anti-money laundering "blocks" of each user in the block chain and wherein the said "blocks" can be accessed by any authority for verifications and subsequent processing; and wherein the parameters change as per requirements and regulations and wherein the BlockAML will ensure authentications at various points.

8. A method as claimed in claim 4 wherein the sub-platform to be executed is the BlockLOAN platform as shown in BlockLOAN architecture modelled in the same manner wherein BlockLOAN creates the loan disbursements and all its installments as a "block" on blockchain of each user in the block chain and wherein the BlockLOAN will ensure authentications at various points.

9. A method as claimed in claim 4 wherein the sub-platform to be executed is the BlockPASSPORT platform as shown in BlockPASSPORT architecture modelled in the same manner wherein all digital scans of all identification records of user are also available for viewing to the user with an upload option of missing / new documents; and wherein the parameters change as per requirements and wherein a non-registered BlockPASSPORT user can enroll using new registration option which opens further screens for completing documentary details and registration.

10. A method as claimed in claim 4 wherein the sub-platform to be executed is the BlockVISA platform as shown in the BlockVISA architecture modelled in the same manner wherein the parameters will change as per the visa issuing, renewal and verification requirements of each country and its embassy, immigration and boarder control regulations.
